# EUROPÄISCHE PATENTSCHRIFT

(11) **EP 1 228 945 B1**
(45) Veröffentlichungstag und Bekanntmachung des Hinweises auf die Patenterteilung: **04.06.2003**
(21) Anmeldenummer: 02002147.3
(22) Anmeldetag: 29.01.2002
(51) Int. Cl.: B62D 25/06, B60R 9/04

(54) **Fahrzeugdach mit integrierter Dachreling und Längsträger**
Vehicle roof with integrated roof rail and roof side beam
Toit de véhicule avec rail de toit et barre longitudinal integrés

(30) Priorität: 06.02.2001 DE 10105167
(43) Veröffentlichungstag der Anmeldung: 07.08.2002
(73) Patentinhaber: JAC Products Deutschland GmbH, 42285 Wuppertal (DE)
(72) Erfinder: Lumpe, Karl-Heinz, 45749 Sprockhövel (DE); Gross, Michael, 44809 Bochum (DE); Kolodziej, Klaus, 42329 Wuppertal (DE)
(74) Vertreter: Rehders, Jochen, Dipl.-Ing.

(56) Entgegenhaltungen:
- WO-A-01/56836
- DE-A- 19 629 060
- DE-A- 19 948 646
- DE-C- 3 736 028
- PATENT ABSTRACTS OF JAPAN vol. 1997, no. 05, 30. Mai 1997 (1997-05-30) -& JP 09 002163 A (DAIHATSU MOTOR CO LTD;AISIN SEIKI CO LTD), 7. Januar 1997 (1997-01-07)

## Beschreibung

Die Erfindung bezieht sich auf ein Fahrzeugdach für einen Personenkraftwagen, wie Limousine, Coupé, Kombi, Van oder Kleinbus mit einem Dachblech, einem Längsträger an jeder Fahrzeuglängsseite als Verbindungselement zwischen dem Dachblech und den Fahrzeugseitenwänden bzw. den Seitenwandsäulen und einer das Dachblech überragenden Dachreling an jeder Fahrzeuglängsseite zur Befestigung von Dachlastenquerträgern od. dgl..

Ein Fahrzeugdach der vorgenannten Art ist z.B. in der DE 29 39 671 A1 oder auch in der DE 199 15 546 A1 gezeigt, während die Druckschriften DE 35 24 558 A1 oder DE 35 39 449 A1 auch heute noch gebräuchliche Dachrelings offenbaren.

Der Aufwand fiir die Herstellung eines Fahrzeugdachs der eingangs genannten Art für einen Personenkraftwagen od. dgl. ist ebenso wie der Aufwand für die Herstellung und Montage einer Dachreling beachtlich, so dass es bei der vorliegenden Erfindung im wesentlichen um eine Herstellungsvereinfachung und um eine wesentliche Kosteneinsparung geht.

Der Erfindung liegt demgemäß ausgehend von einem Fahrzeugdach der eingangs genannten Art die Aufgabe zugrunde, einen Fahrzeugdachaufbau mit Dachrelings zu vereinfachen und gegenüber dem Stand der Technik wesentlich kostengünstiger zu gestalten.

Diese Aufgabe wird erfindungsgemäß dadurch gelöst, dass der Längsträger und die Dachreling miteinander einen einstückigen, materialeinheitlichen Baukörper bilden.

Durch diese erfindungsgemäße Maßnahme wird erreicht, dass weder die Längsträger noch die Dachrelings eines Fahrzeugdachs separat hergestellt und montiert werden müssen. Die integrierte Anordnung einer Dachreling an einen Längsträger macht eine Vielzahl von bisher erforderlich gewesenen Einzelteilen, wie Stützfiiße, Adapter, Befestigungselemente, Dichtungsscheiben u. dgl. nunmehr unnötig, so dass auch die Bereitstellung und Lagerhaltung dieser Einzelteile entfällt.

Der erfindungsgemäße, aus Längsträger und Dachreling bestehende Baukörper kann kastenrohrartig gestaltet sein und eine dem Dachverlauf des Fahrzeugdachs entsprechend gebogene Formgebung aufweisen.

Gemäß einer bevorzugten Ausgestaltung der Erfindung weist der Dachrelingsbereich des Baukörpers einen durchlaufenden Pilzkopf oder zumindest einseitig eine Längssicke zum Hintergreifen eines Befestigungselements des Dachlastenquerträgers auf. Durch den Pilzkopf oder durch die zumindest einseitige Längssicke erhält der am fertigen Fahrzeug den Augen eines Betrachters zugängliche Dachrelingsbereich (der Dachlängsträgerbereich ist in der Regel durch eine Blechbeplankung den Augen eines Betrachters entzogen) eine optimale Stabilisierung und darüber hinaus auch ein besonders ansprechendes Styling.

Das äußere Erscheinungsbild des Dachrelingsbereich des Baukörpers kann noch wesentlich aufgewertet werden, wenn gemäß einer vorteilhaften Weiterbildung der Erfindung vorgesehen wird, dass zumindest der Dachrelingsbereich des Baukörpers außenseitig eine lackierte oder eloxierte Oberfläche aufweist. Dabei kann der Baukörper aus Stahl oder Aluminium gefertigt sein.

Eine bevorzugte Weiterbildung der Erfindung besteht darin, daß der aus einem ggf. vorgebogenen Rohrabschnitt bestehende, einen Längsträgerbereich und einen Dachrelingsbereich umfassende Baukörper durch ein Innenhochdruck nutzendes Formgebungsverfahren gebildet ist. Hierbei wird der Abschnitt eines Rohres, bei dem es sich um den Abschnitt eines Strangpreßprofils handeln kann, entsprechend dem Verlauf des jeweiligen Fahrzeugdachs gebogen und in eine der Form des herzustellenden Baukörpers entsprechende Kavität eines Umformwerkzeugs eingelegt und nach dem Schließen des Umformwerkzeugs mit einem Druckmedium beaufschlagt, wobei im Innern des Rohrabschnitts ein Innenhochdruck aufgebaut wird, um den Rohrabschnitt zu einem sich aufweitenden Umformen bis zur vollständigen Anlage an der Kavitätswandung des Umformwerkzeugs zu veranlassen. Als Druckmedium wird bevorzugt Wasser verwendet und mit einem bei 2000 bis 3000 bar liegenden Druck gearbeitet. Ein durch ein Innenhochdruck nutzendes Formgebungsverfahren gebildeter Baukörper mit einem Längsträgerbereich und einem Dachrelingsbereich kann besonders einfach und wirtschaftlich hergestellt werden, und zwar mit hoher Fertigungsgenauigkeit und hoher Fertigungs- und Oberflächengüte. Querschnittsänderungen über die Baukörperlänge gesehen, wie etwa zum Längsträger hin abfallende Höhen der Dachrelingendbereiche oder auslaufende Längsseiten bereiten, wie Versuche gezeigt haben, keine fertigungstechnischen Probleme. Natürlich lassen sich in weiten Grenzen Wünsche der Abnehmerschaft hinsichtlich besonderer Querschnittsformen des Baukörpers sowohl im Längsträgerbereich als auch im Dachrelingsbereich realisieren.

Einem Bestreben der Automobilbauer zukünftig verstärkt modulare Fahrzeugbauteile einzusetzen wird durch eine Weiterbildung der Erfindung, die darin besteht, dass das Dachblech mit den jeweils einen Längsträgerbereich und einen Dachrelingsbereich aufweisenden Baukörpern unlösbar verbunden ist und zusammen mit einem am Dachblech festgelegten Dachhimmel eine vorgefertigte Montageeinheit bildet, Rechnung getragen. Dabei kann der Dachhimmel mit einem Dachhimmelbezug und/oder mit Innenraumverkleidungen, Sonnenblenden, Innenrückspiegel, Innenbeleuchtungseinrichtungen, Verkabelungen, Bedien- und Anzeigeelemente, Schiebe- oder Sonnendach und deren Rahmenteile und Antriebselemente, Haltegriffe u. dgl. versehen sein. Es empfiehlt sich, dass die vorgefertigte Montageeinheit eine auf die Fügestellen der Fahrzeugseitenwände bzw. der Seitenwandsäulen abstimmbare Anschlußkonfiguration aufweist.

Ein Ausführungsbeispiel der Erfindung wird nachfolgend anhand der Zeichnung näher erläutert, und es zeigen:
- Fig. 1: eine Draufsicht auf den Dachbereich eines Fahrzeugs und
- Fig. 2: einen Schnitt etwa folgend der Linie II-II in Fig. 1.

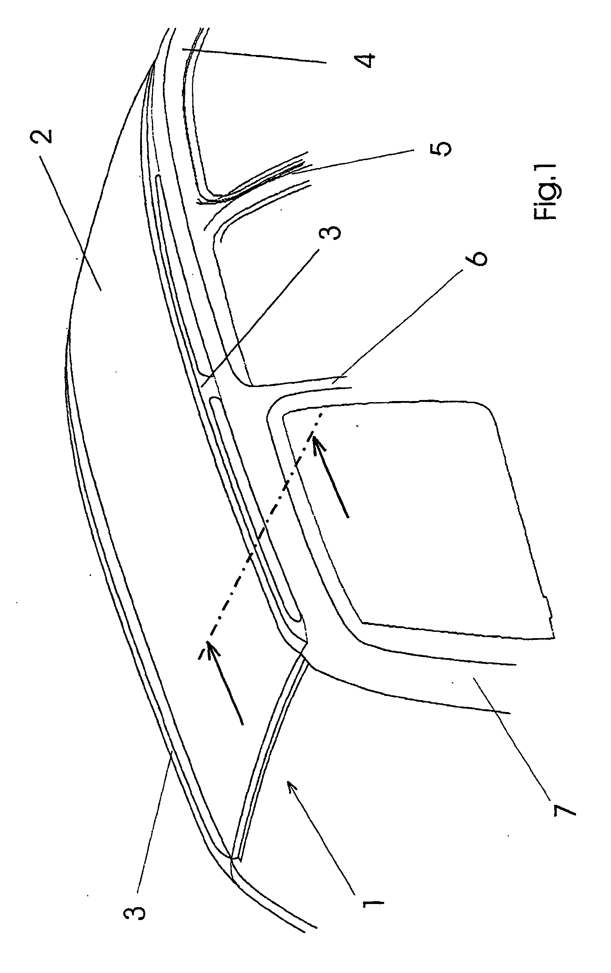

Das in Fig. 1 mehr schematisch dargestellte Fahrzeug 1 läßt ein Fahrzeugdach mit einem Dachblech 2 und das Dachblech 2 überragende Dachrelings 3, die sich längs der seitlichen Fahrzeugdachbereiche erstrecken, erkennen. Das Fahrzeugdach wird von den Seitenwandstrukturen der Fahrzeugkarosserie bzw. den Seitenwandsäulen (A-Säule 4, B-Säule 5, C-Säule 6 und D-Säule 7) getragen.

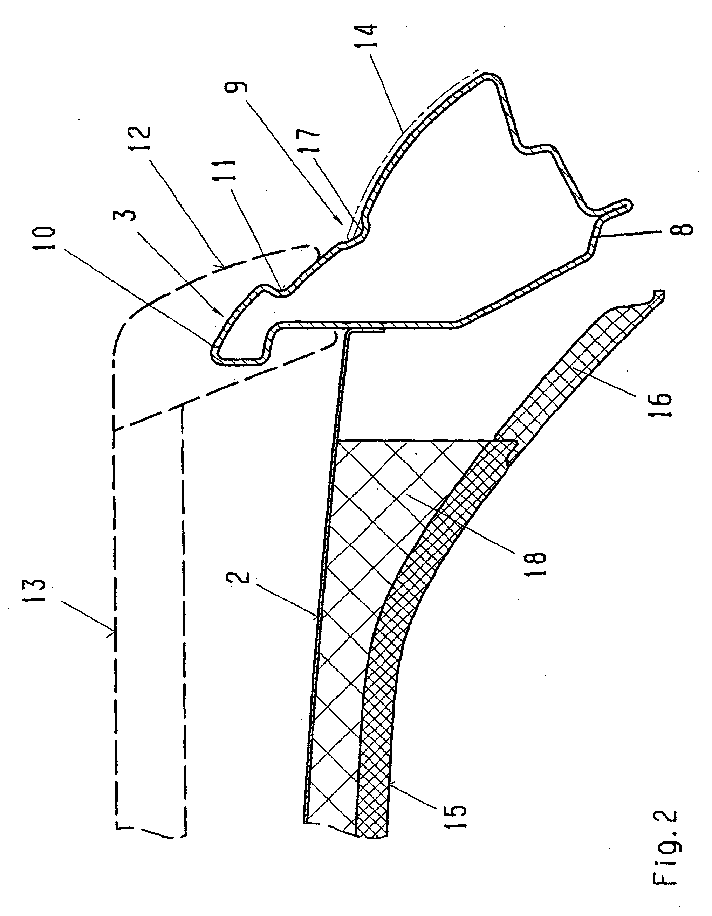

Die Schnittdarstellung nach Fig. 2 zeigt, dass die bzw. jede Dachreling 3 einstöckig mit einem Längsträger 8 eines nicht näher dargestellten Dachrahmens ausgebildet ist, d. h. jede Dachreling 3 bildet mit jedem Längsträger 8 einen einstückigen, materialeinheitlichen Baukörper 9, der aus Stahl oder Aluminium bestehen kann. Dieser Baukörper 9 besitzt eine kastenrohrartige Gestaltung mit einer den jeweiligen Anforderungen entsprechenden Querschnittsform. Der Dachrelingsbereich des Baukörpers 9 ist mit einer Verdickung nach Art eines Pilzkopfs 10 ausgebildet. Es ist aber auch denkbar, den Dachrelingsbereich nur mit einer Längssicke 11 auszugestalten. Auf jeden Fall sollten die Dachrelings 3 mit Hinterschnitten zum Hintergreifen von Befestigungselementen 12 eines lediglich gestrichelt angedeuteten Dachlastenquerträgers 13 versehen sein.

Der einen Dachrelingsbereich und einen Längsträgerbereich umfassende Baukörper 9 ist durch ein Innenhochdruck-Umformungsverfahren gebildet, wobei die Erfinder erkannt haben, dass sich durch Anwendung dieses Verfahrens auch Kombinationen von sonst separat hergestellten Bauteilen zu einem einzigen Baukörper in einem einzigen Verfahren mit einem optimalen Fertigungsergebnis herstellen lassen. Bisher wurden die Längsträger aus mehreren verformten Blechen zusammengeschweißt, während nunmehr ein einstückiger Rohrabschnitt durch Anlegen von Innenhochdruck in einem Formwerkzeug zu einem Längsträger 8 umgeformt wird mit der zusätzlichen Besonderheit, dass er auch noch eine integrierte Dachreling 3 aufweist.

Der Längsträger 8 ist weitestgehend den Blicken eines Betrachters entzogen, weil er fahrzeugaußenseitig durch eine gestrichelt angedeutete Blechbeplankung 14 und fahrzeuginnenseitig durch einen Dachhimmel 15, eine Säulenverkleidung 16 oder sonstige nicht näher dargestellte Verkleidungselemente verdeckt ist. Insoweit benötigt der Längsträger 8 auch keine besondere Oberflächenbehandlung. Anders sieht es hingegen bei der Dachreling aus, die nicht nur zur Befestigungsanordnung von Dachlastenquerträgern 13 dient, sondern darüber hinaus ein fahrzeugintegriertes Stylingelement bildet. Daher ist die Dachreling zumindest im sichtbaren Bereich z.B. in Fahrzeugfarbe lackiert oder gar zwecks optischer Aufwertung eloxiert.

Der Querschnitt des Baukörpers 9 kann über seine Länge gesehen variieren. So können z.B. die Endbereiche der Dachrelings 3 sanft zum Dachblech 2 hin abfallen. Auch können leichte rinnenförmige Vertiefungen 17 vorgesehen sein, zum Eingriff und sauberen Abschluß der am Längsträger 8 festzulegenden Blechbeplankung 14.

Das Dachblech 2 ist, wie in Fig. 2 gezeigt, am Längsträger 8 des Baukörpers 9 befestigt, wobei die heute üblichen Befestigungsmethoden, z.B. Kleben eingesetzt werden können. Gemäß der Erfindung ist aber nun vorgesehen, dass das Dachblech 2 mit den jeweils einen Längsträgerbereich und einen Dachrelingsbereich aufweisenden Baukörpern 9 unlösbar verbunden ist und zusammen mit dem am Dachblech 2 festgelegten Dachhimmel 15 eine vorgefertigte Montageeinheit bildet, die als Dachmodul an den Fahrzeugseitenwänden bzw. Seitenwandsäulen 4 - 7 zu befestigen ist. Das Dachmodul besteht gemäß Ausführungsbeispiel aus dem Dachblech 2, den jeweils eine Dachreling 3 und einen Längsträger 8 umfassenden Baukörpern 9, dem Dachhimmel 15 und einer Zwischenlage 18 zwischen Dachblech 2 und Dachhimmel 15. Das Dachmodul weist somit einen Sandwichaufbau auf, wobei die Zwischenlage 18 z.B. aus Schaumkunststoff besteht. Zwischen dem Dachblech 2 und der Zwischenlage 18 einerseits wie auch zwischen der Zwischenlage 18 und dem Dachhimmel 15 andererseits können Klebeverbindungen vorgesehen sein, wobei sowohl physikalisch als auch chemisch abbindende Klebstoffe zum Einsatz kommen können. An den Dachhimmel 15 kann sich eine Dachrahmen- oder Säulenverkleidung 16 anschließen.

Wenn auch im einzelnen nicht dargestellt, kann das Dachmodul eines oder mehrere Anbauteile in vormontierter Anordnung aufweisen. Hierzu gehören beispielsweise ein Dachhimmelbezug, Innenraumverkleidungen, Sonnenblenden, Innenbeleuchtungseinrichtungen, Haltegriffe u. dgl. mehr.

## Patentansprüche

1. Fahrzeugdach für einen Personenkraftwagen od. dgl. mit einem Dachblech (2), einem Längsträger (8) an jeder Fahrzeuglängsseite als Verbindungselement zwischen dem Dachblech (2) und den Fahrzeugseitenwänden bzw. den Seitenwandsäulen (4 - 7) und einer das Dachblech (2) überragenden Dachreling (3) an jeder Fahrzeuglängsseite zur Befestigung von Dachlastenquerträgern (13) od. dgl., **dadurch gekennzeichnet, dass** der Längsträger (8) und die Dachreling (3) miteinander einen einstückigen, materialeinheitlichen Baukörper (9) bilden.

2. Fahrzeugdach nach Anspruch 1, **dadurch gekennzeichnet, dass** der Baukörper (9) kastenrohrartig gestaltet ist.

3. Fahrzeugdach nach Anspruch 1 oder 2, **dadurch gekennzeichnet, dass** der Baukörper (9) eine dem Dachverlauf des Fahrzeugdachs entsprechend gebogene Formgebung aufweist.

4. Fahrzeugdach nach wenigstens einem der vorangegangenen Ansprüche, **dadurch gekennzeichnet, dass** der Dachrelingsbereich des Baukörpers (9) einen durchlaufenden Pilzkopf (10) oder zumindest einseitig eine Längssicke (11) zum Hintergreifen eines Befestigungselements (12) des Querträgers (13) od. dgl. aufweist.

5. Fahrzeugdach nach wenigstens einem der vorangegangenen Ansprüche, **dadurch gekennzeichnet, dass** zumindest der Dachrelingsbereich des Baukörpers (9) außenseitig eine lackierte oder eloxierte Oberfläche aufweist.

6. Fahrzeugdach nach wenigstens einem der vorangegangenen Ansprüche, **dadurch gekennzeichnet, dass** der aus einem gegebenenfalls vorgebogenen Rohrabschnitt bestehende, einen Längsträgerbereich und einen Dachrelingsbereich umfassende Baukörper (9) durch ein Innenhochdruck nutzendes Formgebungsverfahren gebildet ist.

7. Fahrzeugdach nach wenigstens einem der vorangegangenen Ansprüche, **dadurch gekennzeichnet, dass** das Dachblech (2) mit den jeweils einen Längsträgerbereich und einen Dachrelingsbereich aufweisenden Baukörpern (9) unlösbar verbunden ist und zusammen mit einem am Dachblech (2) festgelegten Dachhimmel (15) eine vorgefertigte Montageeinheit bildet.

8. Fahrzeugdach nach Anspruch 7, **dadurch gekennzeichnet, dass** der Dachhimmel (15) mit einem Dachhimmelbezug und/oder mit Innenraumverkleidungen, Sonnenblenden, Innenrückblickspiegel, Innenbeleuchtungseinrichtungen, Verkabelungen, Bedien- ünd Anzeigeelemente, Schiebe- oder Sonnendach und deren Rahmenteile und Antriebselemente, Haltegriffe u. dgl. versehen ist.

9. Fahrzeugdach nach wenigstens einem der vorangegangenen Ansprüche, **dadurch gekennzeichnet, dass** die vorgefertigte Montageeinheit eine auf die Fügestellen der Fahrzeugseitenwände bzw. der Seitenwandsäulen (4 - 7) abstimmbare Anschlußkonfiguration aufweist.

## Claims

1. A vehicle roof for a passenger car or the like, comprising a roof panel (2), a longitudinal member (8) on each long side of the vehicle as a element for connecting the roof panel (2) and the vehicle side walls or the side-wall pillars (4-7) and a roof rail (3) projecting above the roof panel (2) on each long side of the vehicle for fastening roof load crossbars (13) or the like, **characterised in that** the longitudinal member (8) and the roof rail (3) together form a one-piece structural element (9) of uniform material.

2. A vehicle roof according to Claim 1, **characterised in that** the structural element (9) is in the form of a box tube.

3. A vehicle roof according to Claim 1 or 2, **characterised in that** the structural element (9) has a curved shaping which corresponds to the shape of the vehicle roof.

4. A vehicle roof according to at least one of the preceding claims, **characterised in that** the roof rail region of the structural element (9) has a continuous mushroom head (10) or at least on one side a longitudinal bead (11) for engaging behind a fastening element (12) of the crossbar (13) or the like.

5. A vehicle roof according to at least one of the preceding claims, **characterised in that** at least the roof railing region of the structural element (9) has a painted or anodised surface on the outside.

6. A vehicle roof according to at least one of the preceding claims, **characterised in that** the structural element (9) consisting of an optionally prebent tube section, which comprises a longitudinal-member region and a roof-rail region, is formed by a shaping process which utilises internal high pressure.

7. A vehicle roof according to at least one of the preceding claims, **characterised in that** the roof panel (2) is non-detachably connected to the structural elements (9) comprising in each case a longitudinal-member region and a roof-rail region together with a headlining (15) fixed to the roof panel (2) forms a prefabricated assembly unit.

8. A vehicle roof according to Claim 7, **characterised in that** the headlining (15) is provided with a headlining fabric and/or with interior linings, sun visors, interior rear-view mirror, interior light fittings, cabling, operating and display elements, sliding or sun-roofs and their frame parts and drive elements, grab handles and the like.

9. A vehicle roof according to at least one of the preceding claims, **characterised in that** the prefabricated assembly unit has a connection configuration which can be matched to the joints of the vehicle side walls or of the side-wall pillars (4-7).

## Revendications

1. Toit de véhicule pour un véhicule léger ou similaires comprenant une tôle de toit (2), un longeron longitudinal (8) sur chaque côté longitudinal du véhicule, servant d'élément de liaison entre la tôle de toit (2) et les panneaux latéraux du véhicule ou les montants du panneau latéral (4-7), et un rail de toit (3) dépassant de la tôle de toit (2) sur chaque côté longitudinal du véhicule pour fixer des barres transversales de support de charges (13) ou similaires, **caractérisé en ce que** le longeron longitudinal (8) et le rail de toit (3) constituent conjointement un élément de construction (9) d'un seul tenant en un même matériau.

2. Toit de véhicule selon la revendication 1, **caractérisé en ce que** l'élément de construction (9) présente une forme tubulaire en caisson.

3. Toit de véhicule selon la revendication 1 ou 2, **caractérisé en ce que** l'élément de construction (9) présente une forme suivant la courbure du toit de véhicule.

4. Toit de véhicule selon au moins l'une quelconque des revendications précédentes, **caractérisé en ce que** la zone formant rail de toit de l'élément de construction (9) présente une tête de champignon (10) continue ou au moins d'un côté, une moulure longitudinale (11) pour s'accrocher derrière un élément de fixation (12) de la barre transversale (13) ou similaires.

5. Toit de véhicule selon au moins l'une quelconque des revendications précédentes, **caractérisé en ce qu'**au moins la zone formant rail de toit de l'élément de construction (9) présente, côté extérieur, une surface peinte ou anodisée.

6. Toit de véhicule selon au moins l'une quelconque des revendications précédentes, **caractérisé en ce** l'élément de construction (9) constitué par une section de tube le cas échéant précintré et comprenant une zone formant longeron et une zone formant rail de toit est réalisé par un procédé de formage utilisant une haute pression intérieure.

7. Toit de véhicule selon au moins l'une quelconque des revendications précédentes, **caractérisé en ce que** la tôle de toit (2) est reliée de façon fixe à l'élément de construction (9) présentant respectivement une zone formant longeron et une zone formant rail de toit et constitue conjointement avec un habillage de plafond (15) fixé à la tôle de toit (2) une unité de montage préfabriquée.

8. Toit de véhicule selon la revendication 7, **caractérisé en ce que** l'habillage de plafond (15) est muni d'un revêtement d'habillage de plafond et/ou de revêtements intérieurs, de pare-soleil, de rétroviseurs intérieurs, de dispositifs d'éclairage intérieurs, de câblages, d'éléments de service et d'indication, d'un toit ouvrant ou solaire avec ses éléments de cadre et d'entraînement, de poignées et similaires.

9. Toit de véhicule selon au moins l'une quelconque des revendications précédentes, **caractérisé en ce que** l'unité de montage préfabriquée présente une configuration de raccordement adaptable aux endroits de jonction des panneaux latéraux du véhicule ou des montants de panneau latéral (4-7).
